(19) Europäisches Patentamt

European Patent Office

Office européen des brevets

(11) **EP 1 653 453 A2**

(12) **EUROPEAN PATENT APPLICATION**

(43) Date of publication:
**03.05.2006 Bulletin 2006/18**

(51) Int Cl.:
*G11B 7/005* (2006.01)    *G11B 7/007* (2006.01)

(21) Application number: **05256591.8**

(22) Date of filing: **24.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **28.10.2004 US 622698 P**
**19.01.2005 KR 2005005083**

(71) Applicant: **Samsung Electronics Co., Ltd.**
**Suwon-si, Gyeonggi-Do (KR)**

(72) Inventors:
• **Lee, Sang-hyun**
  **Yeongtong-gu,**
  **Suwon-si,**
  **Gyeonggi-do (KR)**
• **Kwon, Young-gi**
  **Gweongseon-gu,**
  **Suwon-si,**
  **Gyeonggi-do (KR)**

(74) Representative: **Robinson, Ian Michael et al**
**Appleyard Lees,**
**15 Clare Road**
**Halifax HX1 2HY (GB)**

(54) **Reading burst cutting area (BCA) data from optical disc**

(57)    Disclosed are a method for reading data recorded on a burst cutting area (BCA) of an optical disc (100) and an optical disc apparatus applying the method. The method comprises the steps of calculating a first driving voltage for driving a spindle motor (110) corresponding to a speed required to read data from a BCA of the optical disc (100), in a predetermined data area of an optical disc (100) by adjusting the driving voltage of the spindle motor (110), which rotates the optical disc (100). The BCA data is read by controlling the speed of the spindle motor (110) according to the calculated first driving voltage.

# FIG. 2

**Description**

The present invention relates to a method for reading burst cutting area (BCA) data and an optical disc apparatus applying the same. More particularly, the present invention relates to a method for reading data recorded in a BCA of an optical disc in an optical disc apparatus which is incapable of controlling spindle rotation by a frequency generator (FG) signal, and an optical disc apparatus applying the same.

An optical disc is a kind of recording medium capable of optically writing, deleting and rewriting certain data thereon. A compact disc (CD) and a digital versatile disc (DVD) are examples of typical optical discs. Recently, high-density optical discs such as an advanced optical disc (AOD) and a blue-ray disc (BD) have been developed. An optical disc apparatus is a device for reproducing the data recorded on the optical disc. The optical disc apparatus may further be able to record data on the optical disc. Examples of optical disc apparatuses include compact disc players (CDP) and DVD players.

Meanwhile, as unauthorized copies of optical discs become more prevalent, various methods have been suggested to prevent unauthorized copying of optical discs. Typically, a content protection for recordable media (CPRM) is used, in which data can be recorded only once and the recorded data is locked so as not to be copied. In media applying the CPRM, the recorded data can be encoded using an unique media identification (ID) and a media key block (MKB). In other words, each recordable optical disc has its own disc ID of 64 bits, written on a burst cutting area (BCA) formed at the innermost area thereof. When recording legally protected data on the optical disc, the disc ID is encrypted using a 56-bit cryptomeria cipher (C2) extracted from the disc ID. The disc ID is read from the BCA during the reproduction and used to generate a key for decrypting the data. Since the data cipher is not decrypted without the correct ID, when it is attempted to copy the data recorded on the optical disc to another medium that does not have the correct disc's ID recorded in the BCA, unauthorized copying of the recorded data can be prevented. In order to implement such a CPRM scheme, the data recorded in the BCA of the optical disc is required to be read. A method for reading the data from the BCA will now be described with reference to the accompanying drawings.

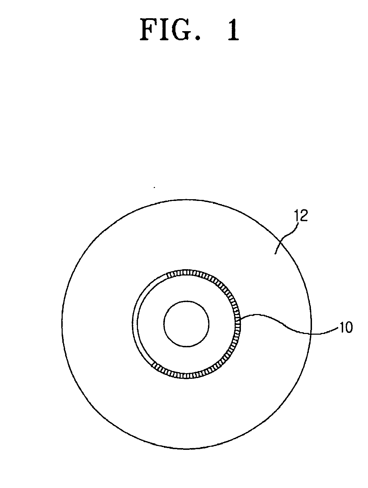

Figure 1 shows the structure of a general optical disc. Referring to Figure 1, a data area 12 is disposed between a lead-in area and a lead-out area respectively formed at an inner area and an outer area of the disc. A BCA 10 is formed along an innermost circumference of the optical disc. User data and an error correction code are recorded in the data area 12, whereas a barcode is marked in the BCA 10 by an Yttrium-Aluminum-Garnet (YAG) laser. While the data is recorded over several tracks in the other area, in the BCA 10, the data is recorded over only one indefinite track. Because marking of the barcode does not have any influence on a stamping operation, each optical disc can have its own disc ID such as a serial number.

Although the data recorded in the BCA of the optical disc may be optically picked up by moving a pickup unit of the optical disc apparatus toward the BCA 10, this requires an optical disc rotational speed of approximately 1440 rpm (24Hz). When the spindle rotation can be controlled by a frequency generator (FG) signal, the optical disc can be rotated at a desired speed by using the FG signal detected corresponding to a rotational speed of a spindle motor which rotates the optical disc at a certain speed. More specifically, the FG signal is a square wave pulse of a certain period and generated during rotation of the optical disc. The FG signal is generated by using the spindle motor comprising a hall element or a hall sensor or by mounting a dedicated FG signal generator on a deck. Therefore, the rotational speed of the optical disc can be controlled by comparing the FG signal with an edge signal of signals reproduced by the pickup unit.

However, when recording or reproducing data with a conventional optical disc, the BCA does not need to be referred to. Therefore, FG signal generators and detectors have been omitted in conventional optical disc apparatuses. Instead, the rotational speed of the optical disc is controlled using a radio frequency (RF) signal detected from the data area 12 of the optical disc. Therefore, in an optical disc apparatus which does not use the FG signal, the optical disc rotation speed can be controlled in the data area 12 using the RF signal, but not in the BCA 10, which does not output an RF signal.

The rotational speed of the optical disc may be controlled using the rotations per minute (RPM) of the spindle motor, which is measurable during the manufacture of the spindle motor according to a driving voltage applied to the spindle motor. However, the RPM may be varied due to differences in physical factors such as characteristics of a set mounting the spindle motor, weight of the optical disc and eccentricity, even though the same driving voltage is applied to the same spindle motor. Accordingly, the reading of data recorded in the BCA 10 of the optical disc is difficult in an optical disc apparatus which does not control the spindle rotation with a FG signal.

According to the present invention there is provided an apparatus and method as set forth in the appended claims. Preferred features of the invention will be apparent from the dependent claims, and the description which follows.

The present invention aims to address at least some of the above problems and/or disadvantages and to provide at least some of the advantages described below. Accordingly, an aspect of the present invention provides a method for reading data recorded in a burst cutting area (BCA) of an optical disc in an optical disc apparatus incapable of controlling the spindle rotation by a frequency generator (FG) signal, and an optical disc apparatus applying the method.

In one aspect of the present invention, there is provided a method for reading burst cutting area (BCA) data, located in a predetermined data area of an optical disc, the method comprising the steps of calculating a first driving voltage for driving a spindle motor, which is required to read data from a BCA of the optical disc by adjusting the driving voltage of the spindle motor that rotates the optical disc; and reading the BCA data by controlling the speed of the spindle motor according to the calculated first driving voltage. Here, the calculating step comprises the step of measuring the driving voltage of the spindle motor when controlling the spindle motor by a constant linear velocity (CLV) scheme in a predetermined data area; calculating the rotation per minute (RPM) of the optical disc, which corresponds to the driving voltage; and adjusting the driving voltage so that the calculated RPM corresponds to the RPM required to read the BCA data of the optical disc.

Preferably, the reading step further comprises the step of adjusting the first driving voltage when the BCA data is not normally read and retrying reading of the BCA data based on the adjusted voltage. The retrying step is repeated a predetermined number of times. The retrying step may further comprise the step of displaying an error when the BCA data is not read, for user convenience.

The reading step further comprises the step of correcting errors with respect to the read BCA data when the BCA data is read. The predetermined data area is the area closest to the BCA. The first driving voltage is the driving voltage for the spindle motor for rotating the optical disc at approximately 1440 rpm.

An optical disc apparatus according to another aspect of the present invention comprises a spindle motor, which rotates an optical disc loaded into an optical drive; and a main controller, which calculates, a first driving voltage for driving a spindle motor corresponding to a speed required to read data recorded on a burst cutting area (BCA) of the optical disc in a predetermined data area of an optical disc by adjusting the driving voltage of the spindle motor which rotates the optical disc, and reads the BCA data by controlling the driving of the spindle motor based on the calculated first driving voltage.

The main controller adjusts the first driving voltage when the BCA data is not normally read and reads the BCA data again. The optical disc apparatus may further comprise a digital signal processor (DSP) which, when the BCA data is read, corrects errors with respect to read BCA data. The first driving voltage is preferably a driving voltage for the spindle motor for rotating the optical disc at approximately 1440 rpm.

The above aspect and other features of the present invention will become more apparent by describing in detail exemplary embodiments thereof with reference to the attached drawing figures, wherein;

Figure 1 shows the structure of a conventional optical disc apparatus;

Figure 2 is a block diagram illustrating an optical disc apparatus applying a method for reading burst cutting area (BCA) data according to an embodiment of the present invention;

Figure 3 is a flowchart for explaining the method for reading BCA data according to an embodiment of the present invention; and

Figures 4A and 4B are views illustrating an exemplary configuration of the BCA data.

It should be understood that throughout the drawings like reference numbers refer to like features, structures, and elements.

Hereinafter, certain exemplary embodiments of the present invention will be described in detail with reference to the accompanying drawing figures.

The matters defined in the description such as a detailed construction and elements are provided to assist in a comprehensive understanding of the invention. Descriptions of well-known functions or constructions are omitted for the sake of clarity and conciseness.

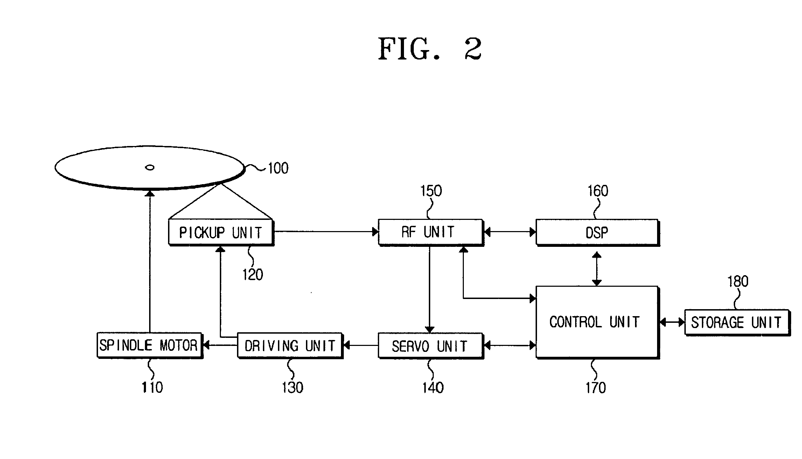

Figure 2 is a block diagram illustrating an exemplary optical disc apparatus applying a method for reading burst cutting area (BCA) data according to an embodiment of the present invention. Referring to Figure 2, the optical disc apparatus comprises a spindle motor 110, a pickup unit 120, a driving unit 130, a servo unit 140, a radio frequency (RF) unit 150, a digital signal processor (DSP) 160, a control unit 170, and a storage unit 180.

The spindle motor 110 is preferably a direct current (DC) motor which rotates an optical disc 100 loaded on an optical drive (not shown) at a predetermined speed according to the DC voltage supplied from the driving unit 130. The pickup unit 120 scans the optical disc 100 with a laser beam and receives the laser beam reflected from the optical disc 100, thereby reading data recorded on the optical disc 100. For this purpose, the pickup unit 120, not shown in detail, may comprise a laser diode as a light source, an objective lens, a focusing actuator, a tracking actuator and a photo diode as an optical detector.

The servo unit 140 controls driving of the spindle motor 110 and the pickup unit 120 according to the control unit 170. For this, the servo unit 140 comprises a motor driver (not shown) for controlling the spindle motor 110, a focusing driver (not shown) for controlling the focusing actuator, and a tracking driver (not shown) for controlling the tracking actuator. In order to regulate the focusing servo and the tracking servo, the servo unit 140 outputs a focusing compensation signal for focusing the servo based on a focusing driver signal and a tracking compensation signal for tracking the servo based on the tracking driver signal. The focusing compensation signal refers to a controlling signal for driving the focusing actuator corresponding to a focus error (FE) signal generated by the RF unit 150, and the tracking compensation signal refers to a controlling signal for driving the tracking actuator corresponding to a tracking error (TE) signal generated by the RF unit 150.

The RF unit 150 generates an RF signal, the FE signal and the TE signal using electric signals output from the pickup unit 120. The FE signal and the TE signal generated by the RF unit 150 are supplied to the servo unit 140 to control the focusing servo and the tracking servo performed by the pickup unit 120.

The DSP 160 demodulates and corrects errors with respect to the RF signal input by the RF unit 150 to thereby generate reproduction data. The control unit 170 regulates the overall operations of the optical disc apparatus. For example, the control unit 170 controls the servo unit 140, the DSP 160 and the RF unit 150 so as to read and convert to a reproducible signal the data recorded on the optical disc 100.

The storage unit 180 stores data and programs for operating the optical disc apparatus.

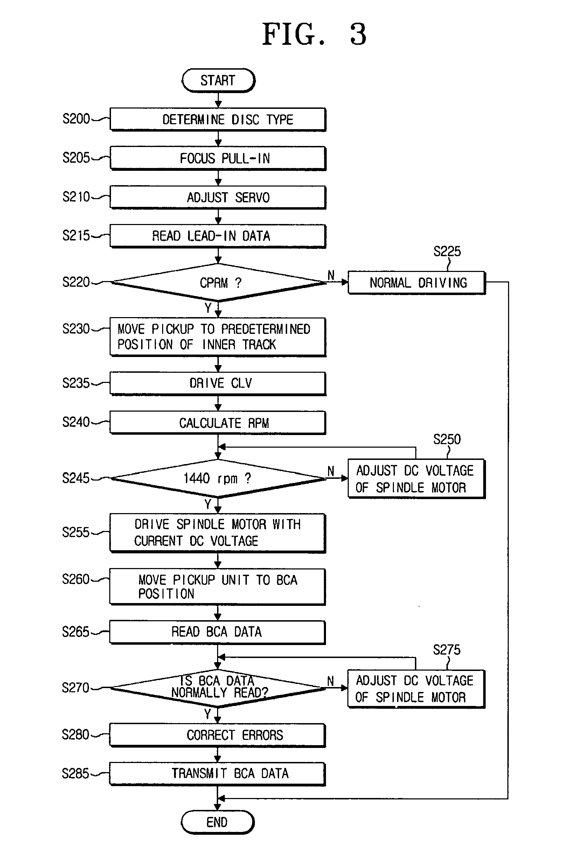

Figure 3 is a flowchart for explaining a method for reading BCA data, according to an embodiment of the present invention. Referring to Figures 2 and 3, first, the type of optical disc 100, such as compact disc (CD), digital versatile disc (DVD), DVD-rewritable (RW), loaded on the optical drive (not shown) is determined (S200). A focus pull-in operation corresponding to the type of optical disc is performed to vertically adjust the pickup (S205) and the servo unit 140 is adjusted (S210). After adjusting the servo unit 140, the lead-in data of the optical disc 100 is read (S215) and with reference to the read lead-in data, it is determined whether the loaded optical disc 100 uses a content protection for recordable media (CPRM) scheme (S220). When the loaded optical disc 100 does not use the CPRM scheme, the optical disc 100 is driven by a normal driving method (S225).

However, when the loaded optical disc 100 is driven according to the CPRM scheme, the pickup is moved to a predetermined position of an inner track of the optical disc 100, that is, a data area (S230). The spindle motor 110 is driven in accordance with a constant linear velocity (CLV) controlling scheme (S235).

The CLV controlling scheme, which is one type of rotation controlling method for an optical disc, controls the rotational speed of the spindle motor 110 so that a linear velocity of the optical disc 100 is constant. In other words, when an angular velocity is constant, the linear velocity is higher at the outer track than the inner track. The CLV controlling scheme varies the rotational speed of the optical disc 100 according to a position of an optical head of the pickup 120 so as to compensate for the difference in the radial position of the optical head in relation to the disc. According to the CLV controlling scheme, the recording capacity is greater compared to a constant angular velocity (CAV) controlling scheme in which the rotational speed of the optical disc 100 is always constant regardless of position of the optical disc 100 being read.

According to the CLV controlling scheme, the rotational speed of the spindle motor 110 is required to be changed as the optical head is moved. Therefore, it is relatively straight forward to estimate the driving voltage for the controlling rotation of the spindle motor 110 and the rotational speed of the spindle motor 110 according to the driving voltage.

After driving the spindle motor 100 according to the CLV controlling scheme, a rotation per minute (RPM) of the optical disc 100 is calculated (S240). Assuming that 'r' refers to a radius of the optical disc 100, the RPM of the optical disc 100 can be calculated by [Expression 1] as follows:

[Expression 1]

$$rpm = \frac{60 * \text{linear velocity}}{2\pi r}$$

For example, when the linear velocity is 3.49m/sec and the radius is 24mm, the RPM of the optical disc 100 becomes (60*3.49)/(2*3.14*24*0.001)=1388.6 rpm.

After calculating the RPM of the optical disc 100, it is determined whether the RPM corresponds to 1440 rpm (S245) because roughly 1440 rpm is required to read the data recorded on the BCA of the optical disc 100. If the calculated rpm is not 1440 rpm, the DC voltage for driving the spindle motor 110 is changed so that the RPM approaches 1440 rpm (S245 and S250).

The spindle motor 110 is driven by the DC voltage that results in the RPM of the optical disc 100 being 1440 rpm (S255). The pickup unit 120 is moved to a position corresponding to the BCA of the optical disc 100 (S260) to read the BCA data from the optical disc 100 (S265). Next, it is determined whether the BCA data is read correctly (S270), wherein read correctly means that the read data can be used by the control unit 170 after application of an error correction scheme.

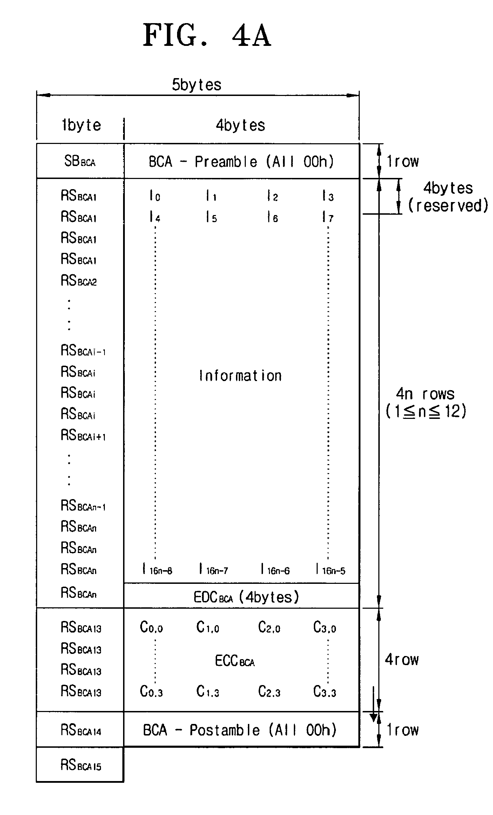

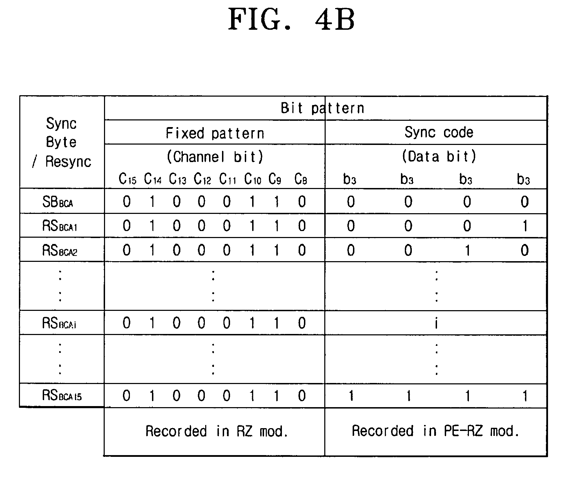

In step S270, whether reading of the BCA data is correctly performed can be determined by determining whether the data read from the optical disc 100 has a pattern corresponding to the expected structure of the BCA data, an example of which is shown in Figures 4A and 4B. The BCA data preferably comprises a synchronization byte, a re-synchronization byte and information. Figure 4A illustrates the structure of the BCA, and Figure 4B illustrates the synchronization byte and the re-synchronization byte comprising a fixed synchronization pattern and a synchronization code.

When the BCA data is not normally read by the DC voltage of when the RPM is 1440 rpm in step S270, the DC voltage for driving the spindle motor 110 is adjusted (S275) and step S270 is repeated to determine whether the BCA data is correctly read (S270). If the BCA data is not correctly read, the driving voltage is re-adjusted (S275) and step S270 is repeated.

When the BCA data is correctly read by varying the DC voltage, the DSP 160 corrects errors (S280) and transmits the error-corrected BCA data (S285). Through such processes, the BCA data of the optical disc 100 can be read although an FG signal corresponding to the RPM of the spindle motor 110 is not present.

As can be appreciated from the above description, according to an embodiment of the present invention, the data recorded on the BCA of the optical disc 100 can be read out without a signal, such as a frequency generator (FG) signal, corresponding to the RPM of the spindle motor 110. Therefore, when such a method is applied to an optical disc apparatus, a dedicated mechanical system is not required, thereby simplifying the structure of the optical disc apparatus and saving manufacturing costs.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A method for reading burst cutting area (BCA) data, comprising the steps of:

   calculating a first driving voltage for driving a spindle motor (110) corresponding to a speed required to read data from a BCA of an optical disc (100) in a predetermined data area of the optical disc (100) by adjusting the driving voltage of the spindle motor (110) which rotates the optical disc (100); and

   reading the BCA data by controlling the speed of the spindle motor (110) according to the calculated first driving voltage.

2. The method of claim 1, wherein the calculating step comprises the steps of:

   measuring the driving voltage of the spindle motor (110) when controlling by a constant linear velocity (CLV) scheme in a predetermined data area;

   calculating a rotation per minute (RPM) of the optical disc (100), which corresponds to the driving voltage; and

   adjusting the driving voltage to the first driving voltage so that the calculated RPM corresponds to a RPM required to read the BCA data of the optical disc (100).

3. The method of claim 1, wherein the reading step further comprises the steps of adjusting the first driving voltage when the BCA data is not correctly read and retrying reading of the BCA data based on the adjusted voltage.

4. The method of claim 3, wherein the retrying step is repeated a predetermined number of times.

5. The method of claim 3, wherein the retrying step further comprises the step of displaying an error when the BCA data is not correctly read.

6. The method of claim 1, wherein the reading step further comprises the step of correcting errors with respect to the normally read BCA data when the BCA data is read.

7. The method of claim 1, wherein the predetermined data area is located closest to the BCA.

8. The method of claim 1, wherein the first driving voltage is driving voltage for the spindle motor (110) for rotating the optical disc (100) at approximately 1440 rpm.

9. An optical disc apparatus comprising:

   a spindle motor (110), which rotates an optical disc (100) loaded to an optical drive; and

   a main controller (170), which calculates, in a predetermined data area of an optical disc (100), a first driving voltage for driving a spindle motor (110) corresponding to a speed required to read data recorded on a burst cutting area (BCA) of the optical disc (100) by adjusting the driving voltage of the spindle motor (110) which rotates the optical disc (100), and reads the BCA data by controlling the speed of the spindle motor (110) according to the calculated first driving voltage.

10. The optical disc apparatus of claim 9, wherein the main controller (170) adjusts the first driving voltage when the BCA data is not correctly read and then attempts to read the BCA data again.

11. The optical disc apparatus of claim 9, further comprising a digital signal processor (DSP) (160) which, when the BCA data is correctly read, corrects errors with respect to the correctly read BCA data.

12. The optical disc apparatus of claim 9, wherein the first driving voltage is driving voltage for the spindle motor (110) for rotating the optical disc (100) at approximately 1440 rpm.

13. A computer readable medium of instructions for controlling a computer to perform a method comprising the steps of
calculating a first driving voltage for driving a spindle motor (110) corresponding to a speed required to read data from a BCA of the optical disc (100) in a predetermined data area of an optical disc (100) by adjusting the driving voltage of the spindle motor (110) which rotates the optical disc (100); and
reading the BCA data by controlling the speed of the spindle motor (110) according to the calculated first driving voltage.

14. The computer readable medium of instructions of claim 13, wherein the calculating step comprises the steps of:

   measuring the driving voltage of the spindle motor (110) when controlling by a constant linear velocity (CLV) scheme in a predetermined data area;
   calculating a rotation per minute (RPM) of the optical disc (100), which corresponds to the driving voltage; and
   adjusting the driving voltage to the first driving voltage so that the calculated RPM corresponds to a RPM required to read the BCA data of the optical disc (100).

15. The computer readable medium of instructions of claim 13, wherein the reading step further comprises the step of adjusting the first driving voltage when the BCA data is not correctly read and retrying reading of the BCA data based on the adjusted driving voltage.

16. The computer readable medium of instructions of claim 15, wherein the retrying reading step is repeated a predetermined number of times based on the adjusted voltage.

17. The computer readable medium of instructions of claim 15, wherein the retrying step further comprises the step of displaying an error when the BCA data is not correctly read.

18. The computer readable medium of instructions of claim 13, wherein the reading step further comprises the step of correcting errors with respect to the normally read BCA data when the BCA data is read.

19. The computer readable medium of instructions of claim 13, wherein the predetermined data area is located closest to the BCA.

20. The computer readable medium of instructions of claim 13, wherein the first driving voltage is driving voltage for the spindle motor (110) for rotating the optical disc (100) at approximately 1440 rpm.

# FIG. 1

# FIG. 2

# FIG. 3

START

S200 — DETERMINE DISC TYPE

S205 — FOCUS PULL-IN

S210 — ADJUST SERVO

S215 — READ LEAD-IN DATA

S220 — CPRM ? ——N——→ S225 NORMAL DRIVING

Y ↓

S230 — MOVE PICKUP TO PREDETERMINED POSITION OF INNER TRACK

S235 — DRIVE CLV

S240 — CALCULATE RPM

S245 — 1440 rpm ? ——N——→ S250 ADJUST DC VOLTAGE OF SPINDLE MOTOR

Y ↓

S255 — DRIVE SPINDLE MOTOR WITH CURRENT DC VOLTAGE

S260 — MOVE PICKUP UNIT TO BCA POSITION

S265 — READ BCA DATA

S270 — IS BCA DATA NORMALLY READ? ——N——→ S275 ADJUST DC VOLTAGE OF SPINDLE MOTOR

Y ↓

S280 — CORRECT ERRORS

S285 — TRANSMIT BCA DATA

END

# FIG. 4A

# FIG. 4B

| Sync Byte / Resync | Bit pattern | | | | | | | | | | | |
| --- | --- | --- | --- | --- | --- | --- | --- | --- | --- | --- | --- | --- |
| | Fixed pattern | | | | | | | | Sync code | | | |
| | (Channel bit) | | | | | | | | (Data bit) | | | |
| | $C_{15}$ | $C_{14}$ | $C_{13}$ | $C_{12}$ | $C_{11}$ | $C_{10}$ | $C_9$ | $C_8$ | $b_3$ | $b_3$ | $b_3$ | $b_3$ |
| $SB_{BCA}$ | 0 | 1 | 0 | 0 | 0 | 1 | 1 | 0 | 0 | 0 | 0 | 0 |
| $RS_{BCA1}$ | 0 | 1 | 0 | 0 | 0 | 1 | 1 | 0 | 0 | 0 | 0 | 1 |
| $RS_{BCA2}$ | 0 | 1 | 0 | 0 | 0 | 1 | 1 | 0 | 0 | 0 | 1 | 0 |
| ⋮ | | | | ⋮ | | | | | | ⋮ | | |
| $RS_{BCAi}$ | 0 | 1 | 0 | 0 | 0 | 1 | 1 | 0 | | | i | |
| ⋮ | | | | ⋮ | | | | | | ⋮ | | |
| $RS_{BCA15}$ | 0 | 1 | 0 | 0 | 0 | 1 | 1 | 0 | 1 | 1 | 1 | 1 |
| | Recorded in RZ mod. | | | | | | | | Recorded in PE-RZ mod. | | | |

11